# EUROPEAN PATENT APPLICATION

(11) **EP 1 666 404 A1**
(43) Date of publication of application: **07.06.2006**
(21) Application number: 04773256.5
(22) Date of filing: 17.09.2004
(51) Int. Cl.: B66F 9/065, B60K 17/04

(54) **REACH STACKER**

(30) Priority: 26.09.2003 JP 2003335196
(71) Applicant: MITSUBISHI HEAVY INDUSTRIES, LTD., Tokyo 108-8215 (JP)
(72) Inventor: TSUJI, Hajime, MITSUBISHI HEAVY INDUSTRIES, LTD., Sagamihara-shi, Kanagawa 2291193 (JP)
(74) Representative: Henkel, Feiler & Hänzel
(86) International application number: PCT/JP2004/013612
(87) International publication number: WO 2005/030633

(57) **Abstract**

In a reach stacker having above a frame a spreader, a boom, etc. for holding, moving and transshipping operations for containers, a transfer (14) is provided in proximity to a front differential (15) for driving a front axle, and power from an engine (11) and a transmission (12) disposed rearward in a vehicle is connected to the transfer (14) via a propeller shaft (13). The center (I) of rotation of a bevel gear, which the front differential (15) has, may be offset with respect to the center (D) of the vehicle in a vehicle width direction which is the rotation axis of the propeller shaft (13), and the bevel gear and the propeller shaft (13) may be connected via the transfer (14) .

## Description

### TECHNICAL FIELD

This invention relates to a reach stacker for performing transshipment or movement of containers at ports, etc.

### BACKGROUND ART

In a port, etc., a fixed crane and a fork lift are used for loading and unloading or movement of containers. However, they have been defective in that the fixed crane is limited in a distance over which it moves the container, while the fork lift can access only the container located in front of the fork lift. Thus, a cargo handling vehicle, called a reach stacker, is used. The reach stacker, compared with the fixed crane, is low in cost, corners easily, has no limitations on the distance over which it moves the container. Compared with the fork lift, the reach stacker can access not only the container placed at the front, but the container located at the back. Thus, the reach stacker is very convenient in transshipping and moving containers.

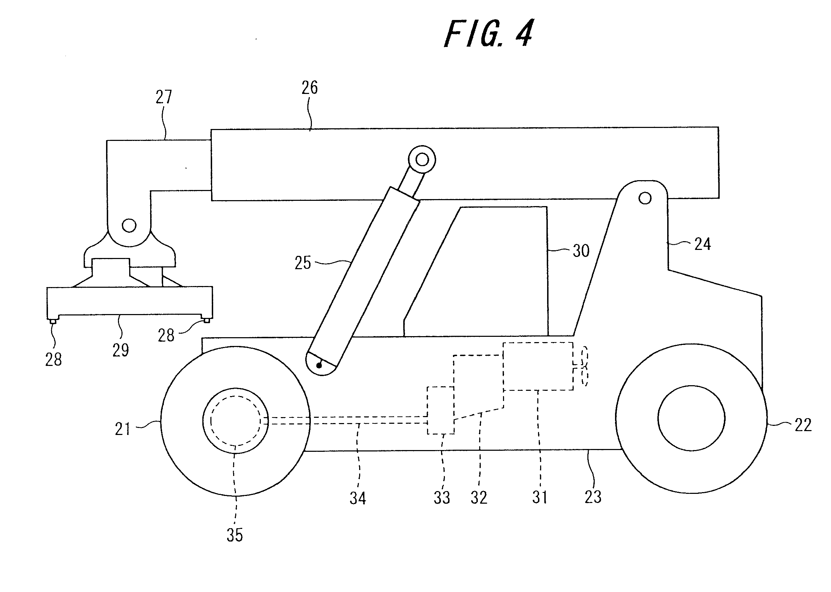

A schematic view of a conventional reach stacker is shown in FIG. 4.
As shown in FIG. 4, the reach stacker has a frame 23 mounted with four front wheels 21 and two rear wheels 22; a boom 26 disposed above the frame 23 so as to be tiltable about a tower 24 by a tilt cylinder 25; a top boom 27 provided within the boom 26 so as to be extensible and contractible, and extended and contracted by a telescopic cylinder (not shown) provided within the boom 26; and a spreader 29 provided at a front end portion of the top boom 27, adapted to be capable of making an extending and contracting motion, a rotating motion, an inclining motion, and a paralleling motion, and holding a container by four twist lock pins 28. A cab 30 is disposed on the upper surface of the frame 23 and below the boom 26, and an operator can perform a moving action for the reach stacker itself, or a holding action or an installing action for the container, with the use of an operating panel within the cab 30.

An engine 31, which serves as a power plant for driving the reach stacker, is disposed on a rear side within the frame 23. Forward of the engine 31, a transmission 32 (hereinafter referred to as "mission") for performing a shift, and a transfer 33 for performing torque transmission are disposed in this order. Power from the transfer 33 is transmitted to a front differential 35 (hereinafter referred to as "front diff"), which has a bevel gear inside it, via a propeller shaft 34, so that power from the engine 31 is transmitted to the front wheels 21.

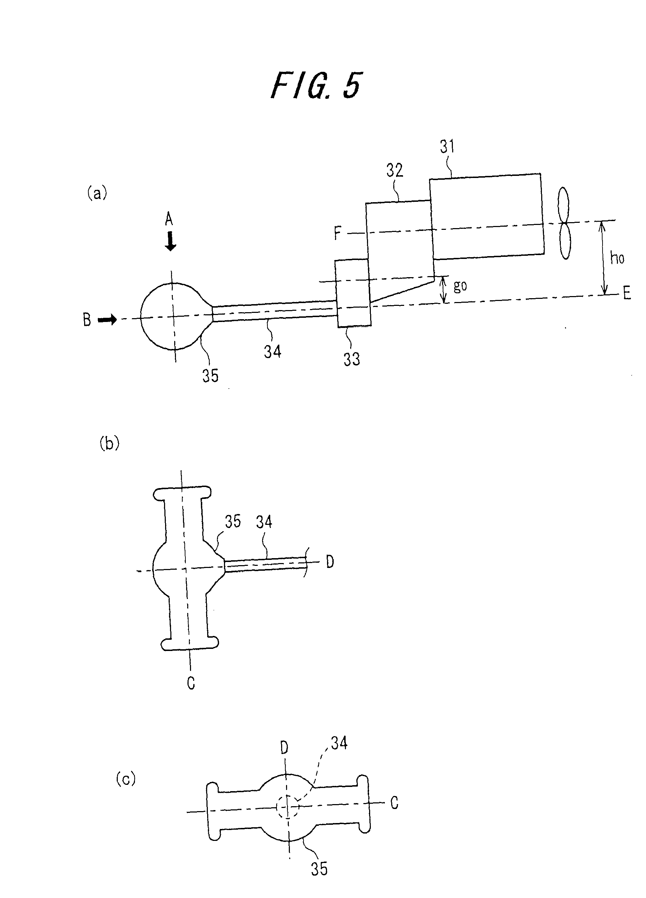

FIGS. 5 (a) to 5 (c) show drawings for illustrating the layout of a power system of the conventional reach stacker.
FIG. 5 (a) is a view of the power system as viewed from the lateral side of the frame. FIG. 5 (b) is a view taken in the direction of A in FIG. 5(a), namely, a view taken from the top side of the frame. FIG. 5(c) is a view taken in the direction of B in FIG. 5(a), namely, a view taken from the front side of the frame.

The reach stacker lifts a heavy container with the use of the spreader 29 disposed forwardly of the frame 23. Thus, in order to stabilize the posture of the vehicle, a heavy load is distributed on the rear side of the frame 23. That is, a counterweight (not shown) is placed on the rear side of the frame 23, and the heavy engine 31 is also placed usually on the rear side of the frame 23. As shown in FIGS. 5 (a) to 5 (c), the front diff 35 disposed, such that its vehicle width direction lies on an axle C of the front wheel (front axle) and its center is located at the vehicle body center D in the vehicle width direction, is connected to the engine 31, mission 32 and transfer 33, which are provided on the rear side of the frame 23, via the propeller shaft 34. That is, the center of rotation of the bevel gear within the front diff 35, which drives the front axle, is located to be at the position of the vehicle body center D, and the propeller shaft 34 connected to the bevel gear is also positioned at the vehicle body center D.
Patent Document 1 : Japanese Patent Application Laid-Open No. 1997-263394

### DISCLOSURE OF THE INVENTION

### Problems to be solved by the Invention

The reach stacker is required to have a low center of gravity in order to maintain a stable posture because of its actions and functions. Thus, as low a vehicle height as possible is desirable. Moreover, the low vehicle height is highly advantageous in doing work in a place having height limitations, in storage of the vehicle itself, or in driving on an ordinary road.

For example, let us compare the reach stacker with a fork lift of the same class. The reach stacker has the cargo handling boom mounted above the cab instead of a mast of a fork lift, so that its vehicle height can be rendered low, thus making the reach stacker effective for work, etc. in a place with height limitations. However, the entire vehicle height is determined by the aspects of ensuring the strength of the boom, improving the operator's comfort, and arranging the power system. Thus, there are limitations to lowering the vehicle height.

Concretely, in the reach stacker, the power system has a layout as shown in FIG. 5 (a), thus imposing limitations on regulating the height of the frame 23 itself. A further detailed explanation will be offered using FIGS. 5 (a) to 5 (c). A rotating shaft of the engine 31 is connected to an input shaft of the mission 32 via a gear, and an output shaft of the mission 32 is disposed at a position which is lowered by a space (height) where a gear used for a shift is disposed. Similarly, the output shaft of the mission 32 is connected to an input shaft of the transfer 32 via a gear, and an output shaft of the transfer 33, namely, the propeller shaft 34, is disposed at a position which is lowered by a space (height) where a gear used for power transmission is disposed. In the height of the frame 23, therefore, an h0 from the height position E of the front axle C to the rotating shaft position F of the engine is a maj or governing factor. This height h0 has been difficult to decrease.

The present invention has been accomplished in light of the above-mentioned problems. An object of the present invention is to provide a reach stacker having a decreased vehicle height and a low center of gravity.

### Means for solving the Problems

A reach stacker according to claim 1 of the present invention, which solves the above problems, is a reach stacker having a spreader for holding a container, and a boom for supporting the spreader so as to be extensible and contractible, the boom being supported above a vehicle body so as to be tiltable, characterized in that
a transfer is provided in proximity to a front differential for driving a front axle, and power from an engine and a transmission disposed rearward in a vehicle is connected to the transfer via a propeller shaft.

The reach stacker according to claim 2, which solves the above problems, is the above reach stacker characterized in that the center of rotation of a bevel gear, which the front differential has, is offset with respect to the rotation axis of the propeller shaft, and the bevel gear and the propeller shaft are connected via the transfer.

The reach stacker according to claim 3, which solves the above problems, is the above reach stacker characterized in that the propeller shaft is placed on the center line of the vehicle body in a vehicle width direction.

### Effects of the Invention

According to the present invention, the layout of devices constituting a power system is worked out. Thus, a height occupied by the power system is decreased to reduce the height of the frame itself, thereby reducing the height of the entire vehicle.
Consequently, the center of gravity of the vehicle can be lowered.

### Brief Description of the Drawings

FIG. 1 is a schematic view showing an example of an embodiment of a reach stacker according to the present invention.
FIGS. 2 (a) to 2 (c) are views illustrating the layout of a power system of the reach stacker shown in FIG. 1.
FIG. 3 is a view illustrating the optimization of tolerances for dimensions between support pins of the reach stacker shown in FIG. 1.
FIG. 4 is a schematic view of a conventional reach stacker.
FIGS. 5 (a) to 5(c) are views illustrating the layout of a power system of the conventional reach stacker.

### Description of the reference numerals

1 front wheel 2 rear wheel 3 frame 4 tower , 5 tilt cylinder , 6 boom 7 top boom 8 twist lock pin , 9 spreader ,10 cab ,11 engine ,12 transmission ,13 propeller shaft ,14 transfer ,15 front differential

### Best Mode for Carrying Out the Invention

The reach stacker according to the present invention has a spreader, a boom, etc., above a frame (vehicle body), for performing operations for holding, moving and transshipping containers, and has a transfer provided in proximity to a front differential which drives a front axle. The reach stacker connects power, fed from an engine and a transmission disposed rearward in a vehicle, to the transfer via a propeller shaft. The center of rotation of a bevel gear, which the front differential has, may be offset with respect to the vehicle body center in the vehicle width direction where the propeller shaft is located. In this state, the bevel gear and the propeller shaft may be connected via the transfer.

### Embodiment 1

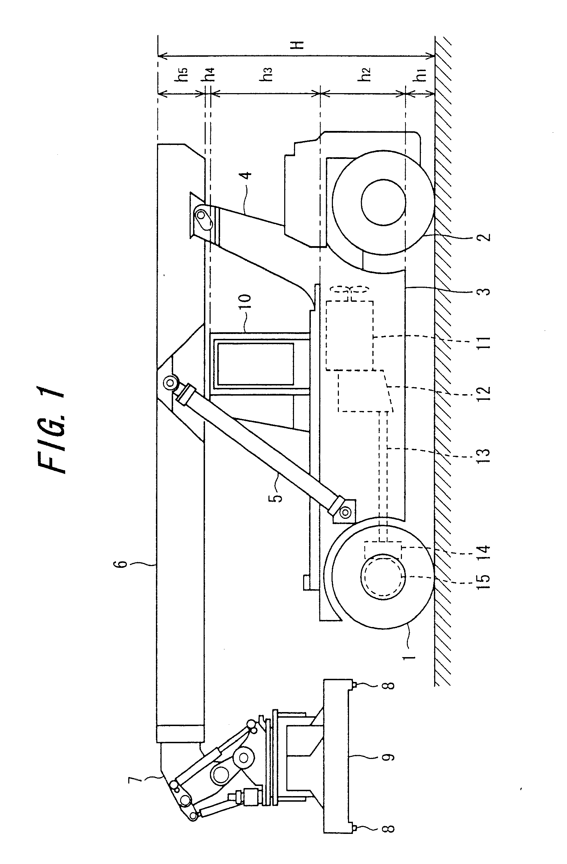

FIG. 1 is a schematic view showing an example of an embodiment of the reach stacker according to the present invention.
The present invention is not limited to the reach stacker, but can be applied to other heavy duty industrial vehicles.

As shown in FIG. 1, the reach stacker according to the present invention has a frame 3 mounted with four front wheels 1 and two rear wheels 2; a boom 6 disposed above the frame 3 so as to be tiltable about a tower 4 by a tilt cylinder 5; a top boom 7 provided within the boom 6 so as to be extensible and contractible, and extended and contracted by a telescopic cylinder (not shown) provided within the boom 6; and a spreader 9 provided at a front end portion of the top boom 7, adapted to be capable of making an extending and contracting motion, a rotating motion, an inclining motion, and a paralleling motion, and holding a container by four twist lock pins 8. A cab 10 is disposed on the upper surface of the frame 3 and below the boom 6, and an operator can perform a moving action for the reach stacker itself, or a holding action or an installing action for the container, with the use of an operating panel within the cab 10.

The reach stacker is required to have a low center of gravity in order to maintain a stable posture. Thus, as low a vehicle height as possible is desirable. Concretely, in order to reduce the height H of the entire vehicle shown in FIG. 1, it is necessary to reduce respective heights, including a height h1 from a road surface to the frame, a frame height h2, a cab height h3, a cab-boom clearance h4, and a boom height h5. In the present invention, attention is focused on the height h2 of the frame 3 and, first of all, an attempt is made to reduce the height h2 of the frame 3 by working on the layout of a power system within the frame, specifically, the power system including an engine and a mission.

In the reach stacker, an engine 11 is used not only as a power source for moving the vehicle, but also for driving the boom 6, the top boom 7, and the spreader 9. For example, the engine 11 also serves as a power source for driving a hydraulic motor, etc. to supply an oil pressure to a hydraulic cylinder, etc. Thus, the devices of the power system, such as the engine 11, are required to produce a minimum amount of output demanded of a cargo handling vehicle. Hence, it is not easy to reduce the sizes of these devices themselves, thereby decreasing the height of the frame.

Furthermore, the reach stacker lifts a heavy container with the use of the spreader 9 disposed forwardly of the frame 3. Thus, in order to stabilize the posture of the vehicle, heavy materials are distributed on the rear side of the frame 3. For example, the heavy engine 11, and a counterweight (not shown) are placed on the rear side of the vehicle. Not only a balance in the longitudinal direction of the vehicle, but also a balance in the vehicle width direction of the vehicle is important. When the boom 6 and the spreader 9 are located at positions in the initial state, it is desired that the center of gravity of the vehicle be at the vehicle body center in the vehicle width direction. The power system, such as the engine 11, is disposed to achieve this state. Thus, a propeller shaft 13 is also often located on the center line of the vehicle body. If the power system, such as the engine 11, is disposed close to either side in the vehicle width direction in order to lower the vehicle height, on the other hand, there is need to control balance in the vehicle width direction of the vehicle, posing difficulty in controlling the posture of the vehicle.

Therefore, the present invention has worked out the layout of the devices of the power system, without disturbing the weight balance of the vehicle, thereby reducing the height of the frame itself, and decreasing the height of the entire vehicle. An example of the concrete layout will be described with reference to FIGS . 1 and 2 (a) to 2(c).

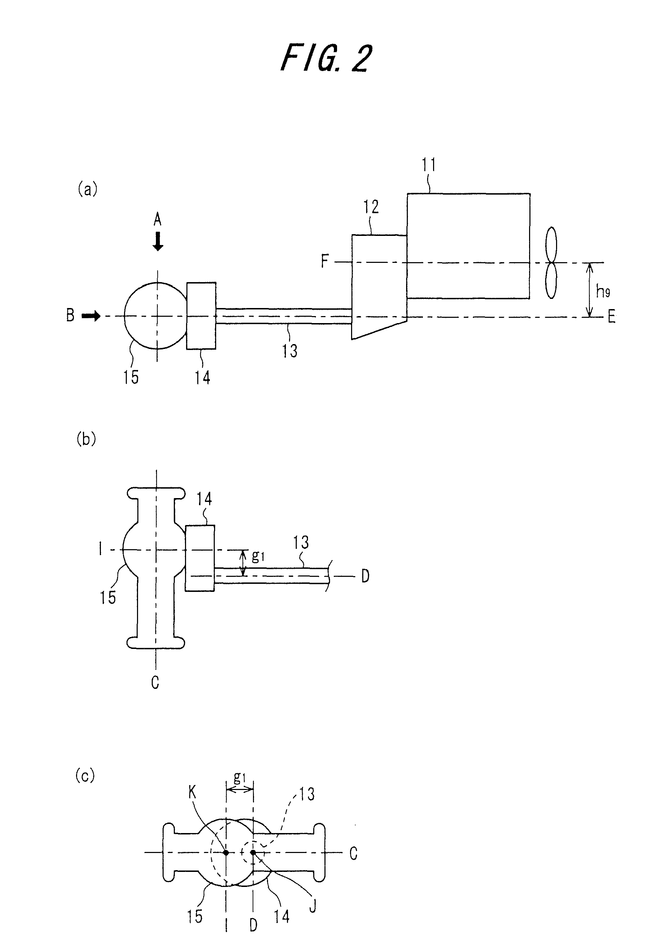

FIGS. 2(a) to 2(c) are views illustrating the layout of the power system of the reach stacker shown in FIG. 1 .
FIG. 2 (a) is a view of the power system as viewed from the side of the frame. FIG. 2 (b) is a view taken in the direction of A in FIG. 2 (a), namely, a view taken from the top side of the frame. FIG. 2(c) is a view taken in the direction of B in FIG. 2(a), namely, a view taken from the front side of the frame.

As shown in FIGS. 1 and 2 (a) to 2 (c), the engine 11, which serves as a power plant for driving the reach stacker, is disposed on the rear side within the frame 3. Forward of the engine 11, a transmission 12 (hereinafter referred to as "mission") for performing a shift is disposed, and connected to a transfer 14, which performs torque transmission, via the propeller shaft 13. The transfer 14 is provided in proximity to a front differential 15 (hereinafter referred to as "front diff") which has a bevel gear inside it. Thus, power from the engine 11 and the mission 12 is transmitted to the transfer 14, which is disposed on the front wheel side, via the propeller shaft 13, and is then transmitted to the front wheel 1 via the front diff 15.

The front diff 15, which has inside it a bevel gear (not shown) for driving a front axle, is disposed such that its vehicle width direction lies on an axle C of the front wheel (front axle). The engine 11 and the mission 12 are disposed on the rear side of the frame 3. In the present invention, the transfer 14 is provided in proximity to the front diff 15, and power from the engine 11 and the mission 12 is transmitted to the transfer 14 and the front diff 15 via the propeller shaft 13. That is, the transfer 14 is shifted to the front axle side, and the positions of the input shaft and the output shaft of the transfer 14 relative to each other are brought in the vehicle width direction. By so doing, a height g0 (see FIG. 5(a)) between the input shaft and the output shaft of the transfer, which has been conventionally needed, is rendered unnecessary, thereby reducing the height of the power system.

In accordance with the changes in the positions of the input shaft and the output shaft of the transfer 14 relative to each other, the position I of a rotating shaft of the bevel gear within the front diff 15 is offset by g1 from the position of the rotation axis of the propeller shaft 13, namely, the center D of the vehiclebody. That is, only the rotating shaft position I of the bevel gear within the front diff 15 is offset from the position of the vehicle body center D. Thus, the power system is arranged, with the positions of the center of gravity of the mission 12 and the engine 11 (heavy materials placed on an extension of the propeller shaft 13) not being moved from the position of the vehicle body center D. Consequently, the balance of the vehicle in the vehicle width direction is not disturbed, and yet the height of the frame can be reduced.

In the above-described features of the power system, a rotating shaft of the engine 11 is connected to an input shaft of the mission 12 via a gear, and an output shaft of the mission 12, namely, the propeller shaft 13, is disposed at a position which is lowered by a space (height) where a gear used for a shift is disposed. The propeller shaft 13 is connected to the input shaft of the transfer 14 via a gear, and the output shaft of the transfer 14 is disposed at a position which is offset in the vehicle width direction by a space where a gear used for power transmission is disposed. The output shaft of the transfer 14 is connected to the bevel gear within the front diff 15. Hence, the height of the frame 3 is determined by a height h9 from the height position E of the front axle C, in other words, the height of the output shaft of the mission 12, to the position F of the rotating shaft of the engine. This height h9 does not include the height component of the transfer 14, as contrasted with the conventional technology. That is, the height h9 is rendered lower than the height h0 (see FIG. 5 (a)) of the conventional reach stacker by the height between the input shaft and the output shaft of the transfer. Thus, the height h2 of the frame 3, accordingly, the height H of the entire vehicle, can be decreased.

Actually, when the offset amount g1 was set at 150 mm based on a design according to the above-described layout, the decrease in the height direction, i.e., "h0 - h9", was about 150 mm.

In FIGS. 2 (a) to 2 (c), there is shown an example in which the rotating shaft position I of the bevel gear is offset only in the vehicle width direction with respect to the vehicle body center D, namely, an example in which a rotating shaft center J of the propeller shaft 13, which is the vehicle body center D, and the position K of the center of rotation of the bevel gear align with the height position of the front axle C, and are offset only in the vehicle width direction. However, the offsetting is not performed only in the vehicle width direction, but the rotating shaft center J of the propeller shaft 13 may be offset further in the height direction with respect to the height position of the front axle C. In this case, the rotating shaft center J of the propeller shaft 13 is offset in the height direction, thus making it possible to reduce the amount of offset of the rotating shaft position I of the bevel gear in the vehicle width direction.

Furthermore, in addition to the aforementioned decrease in the frame height h2, the heights of the other portions can be decreased to the maximum extent possible. Concretely, the different heights, such as the clearance h4 between the boom 6 and the cab 10, and the height h5 of the boom 6, are decreased to reduce the height H of the entire vehicle.

For example, the height h5 of the boom 6 is decreased as a result of strength analysis made by FEM (finite element method) analysis for optimization of the height h5 of the boom 6. Alternatively, high tensile strength steel maybe used for the boom to improve the strength and reduce the weight, thereby decreasing the height h5 of the boom 6 and improving the position of its center of gravity. The height h3 of the cab 10 is set at the minimum required height in consideration of the operator's comfort and, on this precondition, the height h3 of the cab 10 is reduced. The height h1 between the road surface and the frame is set at the minimum road clearance required for work and, on this precondition, the height h1 between the road surface and the frame is reduced. By taking these measures, the height H of the entire vehicle is reduced (see FIG. 1) .

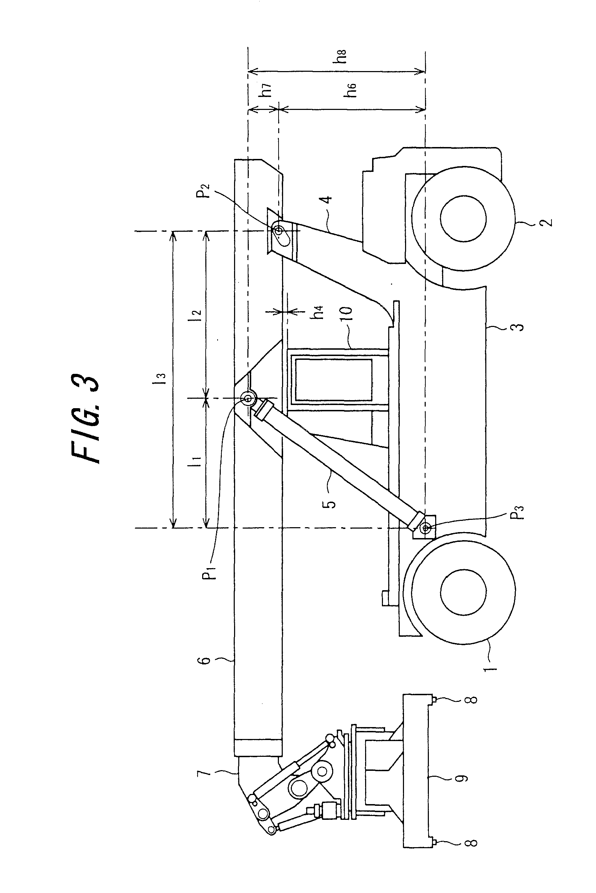

The clearance h4 between the boom 6 and the cab 10 is reduced to a minimum by optimizing tolerances for dimensions between support pins P1 to P3 which support the tilt cylinder 5 and the boom 6. FIG. 3 shows a view illustrating the optimization of the tolerances for the dimensions between these support pins.

As shown in FIG. 3, optimization is performed of the tolerances for dimensions l2 and h7 between the support pins P1 and P2 for the boom 6, dimensions l3 and h6 between the support pins P2 and P3 for the frame 3, and dimensions 11 and h8 between the support pins P1 and P3 for the tilt cylinder 5. By this procedure, the clearance h4 between the boom 6 and the cab 10 is minimized.

As described above, the layout of the respective devices of the power system is arranged to be an optimal layout, whereby the height h2 of the frame 3 itself is reduced. Moreover, optimization of the height h1 between the road surface and the frame, the height h3 of the cab 10, the clearance h4 between the boom 6 and the cab 10, and the height h5 of the boom 6 is performed to decrease the respective heights, thereby reducing the height H of the entire vehicle. By implementing these measures, the center of gravity of the vehicle is lowered.

### Industrial Applicability

The present invention is not limited to the reach stacker, but can be applied to other heavy duty industrial vehicles.

## Claims

1. A reach stacker having a spreader for holding a container, and a boom for supporting said spreader so as to be extensible and contractible, said boom being supported above a vehicle body so as to be tiltable,
**characterized in that**
a transfer is provided in proximity to a front differential for driving a front axle, and power from an engine and a transmission disposed rearward in a vehicle is connected to said transfer via a propeller shaft.

2. The reach stacker according to claim 1,
**characterized in that**
a center of rotation of a bevel gear, which said front differential has, is offset with respect to a rotation axis of said propeller shaft, and said bevel gear and said propeller shaft are connected via said transfer.

3. The reach stacker according to claim 2,
**characterized in that**
said propeller shaft is placed on a center line of said vehicle body in a vehicle width direction.
